# EUROPEAN PATENT SPECIFICATION

(11) **EP 3 367 854 B1**
(45) Date of publication and mention of the grant of the patent: **28.07.2021**
(21) Application number: 16861024.4
(22) Date of filing: 30.10.2016
(51) Int. Cl.: A47J 31/40, A47J 31/46, A47J 31/60

(54) **DYNAMIC WATER DISPERSION AND BREWING CHAMBER CLEANER**
DYNAMISCHE WASSERDISPERSION UND BRAUKAMMERREINIGER
DISPERSION D'EAU DYNAMIQUE ET NETTOYEUR DE CHAMBRE DE BRASSAGE

(30) Priority: 30.10.2015 US 201562249047 P; 30.10.2015 US 201562249009 P; 23.06.2016 US 201615191259; 29.10.2016 US 201615338357
(43) Date of publication of application: 05.09.2018
(73) Proprietor: Rivera, Adrian, Whittier, California 90605 (US); Green, Kenneth, La Habra Heights, California 90631 (US)
(72) Inventor: Rivera, Adrian, Whittier, California 90605 (US); Green, Kenneth, La Habra Heights, California 90631 (US)
(74) Representative: Nordic Patent Service A/S
(86) International application number: PCT/US2016/059621
(87) International publication number: WO 2017/075560

(56) References cited:
- WO-A1-2006/032601
- WO-A1-2015/123612
- US-A- 5 230 278
- US-A- 5 325 765
- US-A- 5 398 596
- US-B1- 7 509 908
- US-B2- 7 059 239

## Description

### CROSS-REFERENCE TO RELATED APPLICATIONS

### Technical Field

The present invention relates to beverage brewing and in particular to a liquid spray into a brewing chamber for cleaning the brewing chamber.

### Background Art

Brewed beverages are often prepared by injecting water into a brewing chamber containing a brewing material such as ground coffee beans. Various configurations are known including inserting a needle into the brewing material, streams of water injected down into the brewing material. Unfortunately, water released or sprayed into the brewing material may form channels or pockets, and the brewed beverage is not uniformly extracted from the brewing material.

Further, after repeated use, the brewing chamber may accumulate residue from various brewing material and extracts. Such residue may alter the desired flavor of future brewed drinks. Apparatus and methods are needed to improve cleaning the brewing chamber.

### Disclosure of the Invention

The present invention addresses the above and other needs by providing a brewing chamber cleaner according to claim 1. The assembly may be attached to a disk configured to removably reside in the brewing chamber for brewing or cleaning, or be part of a coffee maker. Liquid pumped into the assembly may cause the assembly to spin by the liquid flowing past gears or a propeller, or by tangential sprays on a spinning member. Alternatively, the coffee maker includes a rotating shaft to cause the spinning member to spin or may include stator winding creating a rotating magnetic field to cause the spinning member to spin. In another embodiment the assembly includes a wide spray provided by a fixed nozzle. A base is optionally provided to capture the spray for cleaning and direct a flow into a bottom extraction needle of the coffee maker to clean the extraction needle.

In accordance with one aspect of the invention, there is provided a brewing chamber cleaner including a spinning or stationary assembly for uniformly spraying water into the brewing chamber. The spinning assembly may be attached to a disk configured to removably reside in the brewing chamber, or be part of a coffee maker. The water is sprayed in a moving pattern to clean the brewing chamber. On one embodiment, water is pumped into the removable cleaner, and the flow of water causes the spinning assembly to spin by the water flowing past gears or a propeller, or by tangential jets on the spinning member. In another embodiment, the coffee maker includes a rotating shaft engaging the cleaner to cause the spinning assembly to spin, or may include stator winding creating a rotating magnetic field in the brewing chamber to cause the spinning assembly to spin. In another embodiment a wide spray is provided by a fixed nozzle. A base is optionally provided to capture the spray and direct a flow into a bottom extraction needle of the coffee maker.

In accordance with yet another aspect not part of the invention, there is provided a spinning assembly for uniformly dispersing water into brewing material. The spinning assembly may be attached to a removable holder lid, reside in the base of the holder, or be part of the coffee maker. When water is pumped into the spinning assembly, the flow of water is sprayed into brewing material contained in the brewing chamber. On one embodiment, water is pumped into the brewing material holder, and the flow of water causes the spinning assembly to spin by the water flowing past gears or a propeller, or by tangential jets on the spinning member. In another embodiment, the coffee maker includes a rotating shaft engaging the brewing material holder to cause the spinning assembly to spin. In yet another embodiment, the coffee maker includes stator winding creating a rotating magnetic field in the brewing chamber to cause the spinning assembly to spin.

### Brief Description of the Drawing

The above and other aspects, features and advantages of the present invention will be more apparent from the following more particular description thereof, presented in conjunction with the following drawings wherein:
FIG. 1A is a front view of a coffee maker according to the present invention.
FIG. 1B is a side view of the coffee maker according to the present invention.
FIG. 1C is a top view of the coffee maker according to the present invention.
FIG. 2 is a side view of the coffee maker with an open lid allowing placement of a brewing material holder and a brewing chamber accessory according to the present invention inside the coffee maker.
FIG. 2A is a functional diagram of the coffee maker.
FIG. 3A is a top view of a dynamic brewing chamber cleaner according to the present invention.
FIG. 3B is a side view of the dynamic brewing chamber cleaner.
FIG. 3C is a second side view of the dynamic brewing chamber cleaner rotated 90 degrees.
FIG. 4 is a cross-sectional view of the dynamic brewing chamber cleaner taken along line 4-4 of FIG. 3C.
FIG. 5 is a cross-sectional view of the dynamic brewing chamber cleaner taken along line 5-5 of FIG. 4.
FIG. 6A shows a first side view of a second dynamic brewing chamber cleaner.
FIG. 6B shows a second side view of the second dynamic brewing chamber cleaner.
FIG. 7 shows a cross-sectional view of a third dynamic brewing chamber cleaner having internal propeller elements.
FIG. 8 shows a cross-sectional view of a fourth dynamic brewing chamber cleaner having tangentially directed sprays.
FIG. 9 is a cross-sectional view of the fourth dynamic brewing chamber cleaner taken along line 9-9 of FIG. 8.
FIG. 10 shows a fifth dynamic brewing chamber cleaner attachable to a coffee maker nozzle.
FIG. 11 shows a coffee maker with the fifth dynamic brewing chamber cleaner attached to the nozzle.
FIG. 12 shows a coffee maker including a rotating shaft engaging a brewing chamber cleaner.
FIG. 13 shows a cross-sectional view of a sixth dynamic brewing chamber cleaner having a center column rotated by the coffee maker.
FIG. 14 shows a coffee maker including stator windings creating a rotating stator field in a brewing chamber cleaner.
FIG. 15A shows a cross-sectional view of a seventh dynamic brewing chamber cleaner having magnets rotated by the rotating stator field created by the coffee maker.
FIG. 15B shows a cross-sectional view of an alternative seventh dynamic brewing chamber cleaner having a squirrel cave rotor rotated by the rotating stator field created by the coffee maker.
FIG. 16 shows a coffee maker including an offset rotating shaft engaging a brewing chamber cleaner.
FIG. 17 shows a cross-sectional view of an eighth dynamic brewing chamber cleaner having offset gears and a center column rotated by the coffee maker.
FIG. 18 shows a cross-sectional view of a ninth dynamic brewing chamber cleaner including dynamic water dispersion according to the present invention having a dome for dispersing water.
FIG. 19 is a cross-sectional view of the dome taken along line 19-19 of FIG. 18.
FIG. 20 is a cross-sectional view of a one dimensional dome taken along line 19-19 of FIG. 18.
FIG. 21 is a side view of a fixed brewing chamber cleaner according to the present invention.
FIG. 22 is a cross-sectional view of the fixed brewing chamber cleaner according to the present invention, taken along line 22-22 of FIG. 21.
FIG. 23A is a side view of an extraction needle cleaning accessory according to the present invention.
FIG. 23B is a top view of the extraction needle cleaning accessory according to the present invention.
FIG. 24 is a cross-sectional view of the extraction needle cleaning accessory according to the present invention, taken along line 24-24 of FIG. 23B.
FIG. 25 shows a second brewing chamber configuration and a brewing chamber cleaner according to the present invention for the second brewing chamber configuration.
FIG. 26 shows an end view of the brewing chamber cleaner according to the present invention for the second brewing chamber configuration.
FIG. 27 shows a cross-sectional view of the brewing chamber cleaner according to the present invention for the second brewing chamber configuration, taken along line 27-27 of FIG. 26.
FIG. 28A shows a side view of an extraction needle cleaner according to the present invention for the second brewing chamber configuration.
FIG. 28B shows an end view of the extraction needle cleaner according to the present invention for the second brewing chamber configuration.
FIG. 29 shows a third brewing chamber configuration and a brewing chamber cleaner for the third brewing chamber configuration.
FIG. 30A shows a side view of the brewing chamber cleaner for use in the third brewing chamber.
FIG. 30B shows a bottom view of the brewing chamber cleaner for use in the third brewing chamber.
FIG. 31 shows a cross-sectional view of the brewing chamber cleaner for use in the third brewing chamber taken alone line 31-31 of FIG. 30B.
FIG. 32 shows a multi-cup coffee maker and a brewing chamber cleaner for use in the multi-cup coffee maker.
FIG. 33A is a top view of a brewing material holder including dynamic water dispersion.
FIG. 33B is a side view of the brewing material holder including dynamic water dispersion.
FIG. 34 is a cross-sectional view of the brewing material holder including dynamic water dispersion taken along line 34-34 of FIG. 33A.
FIG. 35 is a cross-sectional view of the brewing material holder including dynamic water dispersion taken along line 35-35 of FIG. 34.
FIG. 36A is a side view of a lid assembly the brewing material holder including dynamic water dispersion.
FIG. 36B is a second side view of the lid assembly the brewing material holder including dynamic water dispersion.
FIG. 37 shows a cross-sectional view of a second brewing material holder including dynamic water dispersion having internal propeller elements.
FIG. 38 shows a cross-sectional view of a third brewing material holder including dynamic water dispersion according to the present invention having tangentially directed sprays.
FIG. 39 is a cross-sectional view of the third brewing material holder including dynamic water dispersion according to the present invention taken along line 39-39 of FIG. 38.
FIG. 40 shows a cross-sectional view of a fourth brewing material holder including dynamic water dispersion having a center column rotatably carried by a holder base.
FIG. 41 shows an exploded view of a holder with mesh material in walls of the base to retain brewing material.
FIG. 42 shows an exploded view of a holder with a filter paper cup inserted into the base to retain brewing material.
FIG. 43 shows a coffee maker including a rotating shaft engaging a brewing material holder according to the present invention.
FIG. 44 shows a cross-sectional view of a fifth brewing material holder including dynamic water dispersion according to the present invention having a center column rotated by the coffee maker.
FIG. 45 shows a coffee maker including stator windings creating a rotating stator field in a brewing material holder according to the present invention.
FIG. 46 shows a cross-sectional view of a sixth brewing material holder including dynamic water dispersion according to the present invention having magnets rotated by the rotating stator field created by the coffee maker.
FIG. 47 shows a coffee maker including an offset rotating shaft engaging a brewing material holder according to the present invention.
FIG. 48 shows a cross-sectional view of a seventh brewing material holder including dynamic water dispersion according to the present invention having offset gears and a center column rotated by the coffee maker.
FIG. 49 shows a cross-sectional view of an eighth brewing material holder including dynamic water dispersion according to the present invention having a dome according to the present invention for dispersing water.
FIG. 50 is a cross-sectional view of the dome according to the present invention taken along line 50-50 of FIG. 49.
FIG. 51 is a cross-sectional view of a one dimensional dome according to the present invention taken along line 50-50 of FIG. 49.

Corresponding reference characters indicate corresponding components throughout the several views of the drawings.

### Best Mode for Carrying out the Invention

The following description is of the best mode presently contemplated for carrying out the invention. This description is not to be taken in a limiting sense, but is made merely for the purpose of describing one or more preferred embodiments of the invention. The scope of the invention should be determined with reference to the claims.

Where the terms "about" or "generally" are associated with an element of the invention, it is intended to describe a feature's appearance to the human eye or human perception, and not a precise measurement.

A large variety of coffee and espresso makers are commonly used to make beverages. The coffee and espresso makers are often used one or more times every day, and residue builds as a result of the use.

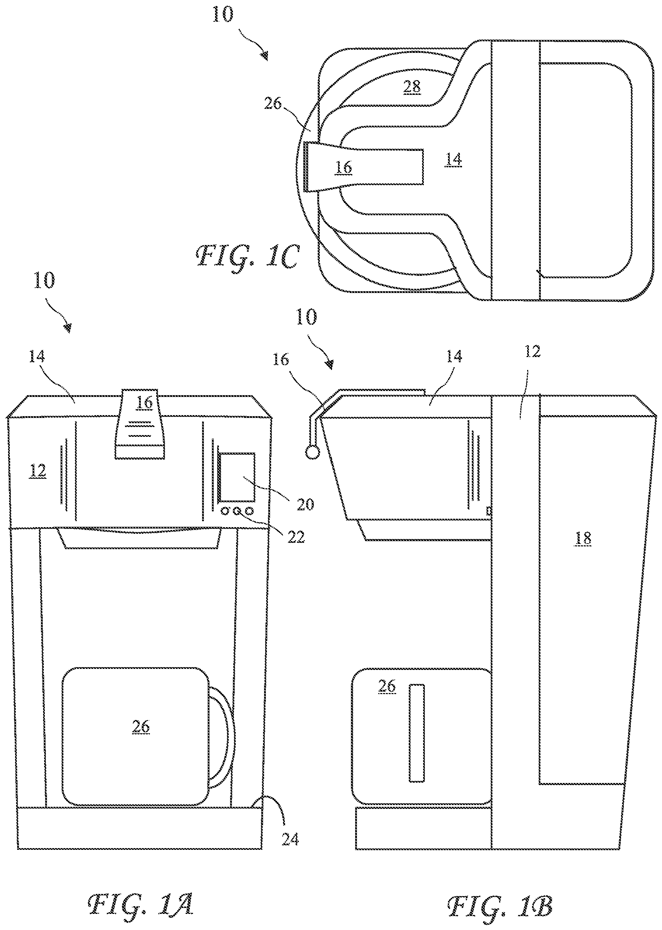

A front view of a coffee maker 10 according to the present invention is shown in FIG. 1A a side view of the coffee maker 10 is shown in FIG. 1B, and a top view of the coffee maker 10 is shown in FIG. 1C. The coffee maker 10 includes a base 12, a brewing chamber lid 14, a lid handle 16, a water container 18, a display 20, controls 22, and platform 24. A cup 26 rests on the platform 24. The coffee maker 10 provides a flow of hot water through brewing material to produce a brewed drink. The flow of water may be heated by one of any known means, for example, an electrical heating coil, inductive heating, or a conductive coating on tubing carrying the water.

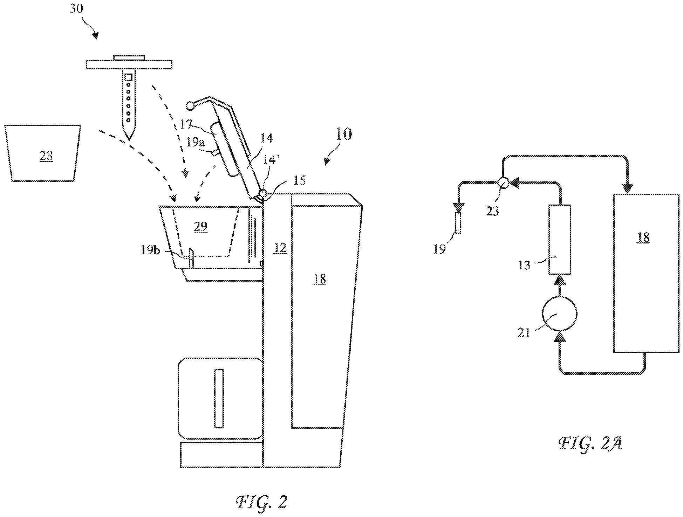

A side view of the coffee maker 10 with a brewing chamber lid 14 allowing placement of a brewing material holder 28, and/or a brewing chamber accessory 31, according to the present invention inside a brewing chamber 29 of the coffee maker 10 is shown in FIG. 2. The brewing chamber lid 14 includes a lid hinge 14' and a water tube 15 carries heated water into the lid 14. A pad 17 resides on a bottom surface of the brewing chamber lid 14 and presses against the brewing chamber accessory 30 when the brewing chamber lid 14 is closed, and in cooperation with several embodiments discloses hereafter, sprays liquid into the brewing chamber to clean the brewing chamber. An injection nozzle 19a extending down from the brewing chamber lid 14 directs the flow of liquid into the brewing chamber accessory 30 and an extraction nozzle 19b extends up into the brewing chamber 29 to release and carry liquid from the brewing chamber 29 in some embodiments.

A functional diagram of the coffee maker 10 is shown in FIG. 2A. The preferred coffee (or brewing material) maker 10 includes the water tank 18, water pump 21, a heater 13, check valve 23 and the nozzle 18. The pump 21 preferably provides at least one PSI water pressure. The water heater 13 may include a heating coil, inductive heating, or a resistive coating or any other means for heating water. The check valve 23 limits the water pressure at the nozzle 19a by returning some of the water flow to the water tank 18. While the water pump 21 is a preferred method for providing a flow of water to the nozzle 19a, other methods include placing the water in the water tank 18 under pressure, and a coffee maker using any means to provide a forced flow of water is intending to come within the scope of the present invention.

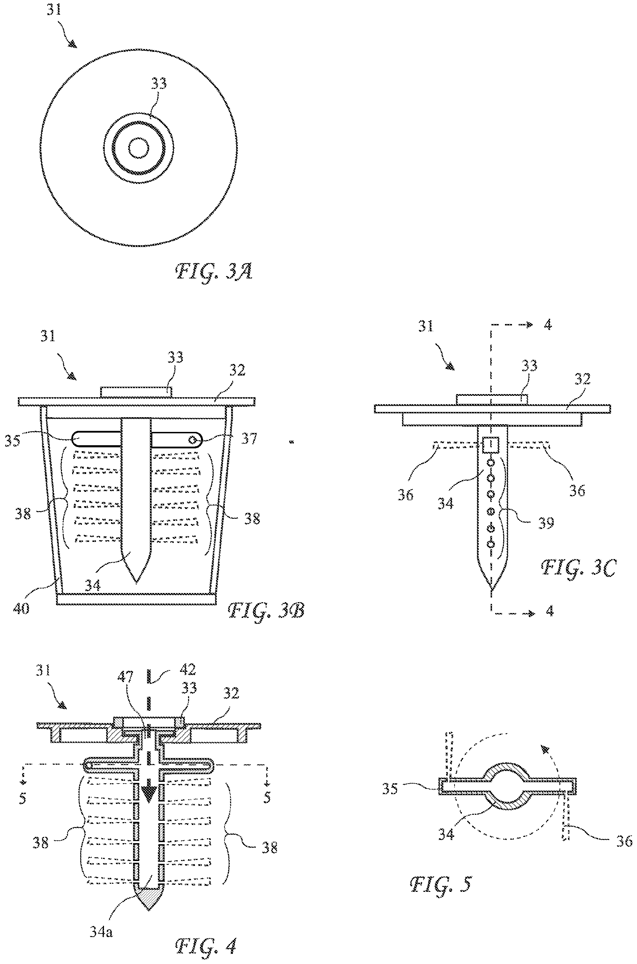

A top view of a brewing chamber accessory comprising a dynamic brewing chamber cleaner 31 according to the present invention is shown in FIG. 3A, a first side view of the dynamic brewing chamber cleaner 31 is shown in FIG. 3B and a second side view of the dynamic brewing chamber cleaner 31 rotated 90 degrees is shown in FIG. 3B. The dynamic brewing chamber cleaner 31 includes a lid (or disk) 32 and a column 34. The lid 32 serves as an adapter to position the brewing chamber cleaner with respect to the brewing chamber 29. A seal 33 extends up from the lid 32 to seal to the coffee maker 10 (see FIG. 2) to provide a flow of water 42 under pressure to the dynamic brewing chamber cleaner 31. The lid 32 may be configured to be held in the coffee maker in the same manner that a coffee holder lid is held in the coffee maker.

The dynamic brewing chamber cleaner 31 may be configured to allow use in coffee makers sold under the trademark KEURIG which include a top puncture needle for injecting pressurized water into a brewing cartridge, and a bottom puncture needle for puncturing sealed brewing cartridges to extract brewed beverage. Such coffee makers are described in US Patent No. 5,325,765. A pressurized flow of water 42 enters the dynamic brewing chamber cleaner 31 through a passage 47 in the lid 32. The passage 47 may be configured to accept the top puncture needle of the '765 patent. A skeleton 40 may be attached to the lid 32. The skeleton 40 provides a perimeter configured to cooperate with the coffee maker of the '765 patent, seating in the coffee maker to provide support for the dynamic brewing chamber cleaner 31 while avoiding the bottom puncture needle described in the '765 patent.

A cross-sectional view of the dynamic brewing chamber cleaner 31 taken along line 4-4 of FIG. 3A is shown in FIG. 4 and a cross-sectional view of the dynamic brewing chamber cleaner 31 taken along line 5-5 of FIG. 4 is shown in FIG 5. A column (or dispensing member) 34 having an interior 34a is rotatable attached to the lid 32. The hollow column 34 includes opposing and vertically spaced apart ports (or orifices) 39 releasing radial sprays 38 of liquid (for example, water or cleaning solution) into the brewing chamber 29. The column 34 includes arms 35 extending radially and including ports 37 releasing tangential sprays of water 36. The tangential sprays of water 36 urge the column 34 to spin, thus cleaning the brewing chamber 29.

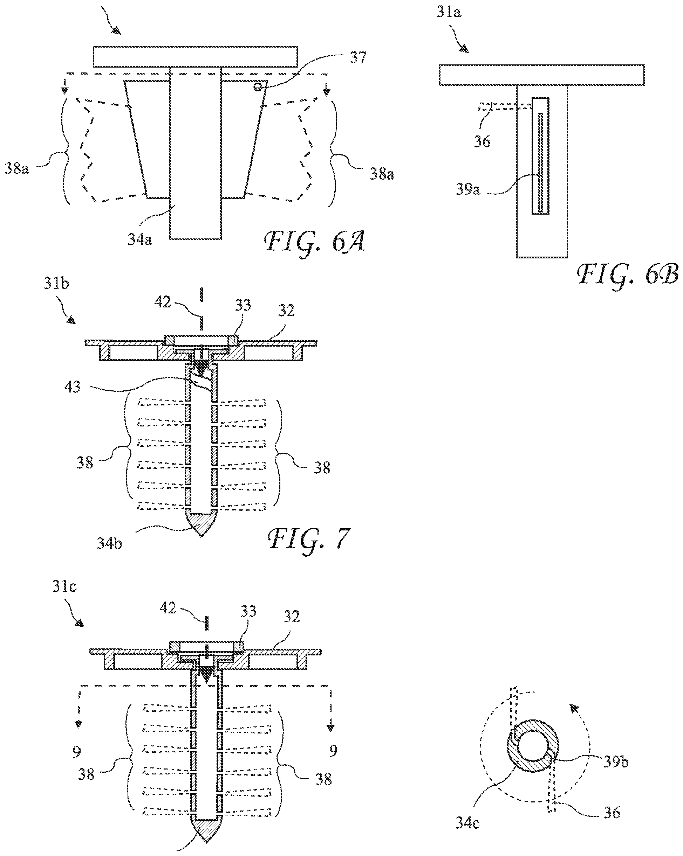

A first side view of a second dynamic brewing chamber cleaner 31a is shown in FIG. 6A and a second side view of a second dynamic brewing chamber cleaner 31a showing tangential flows 36 to rotate the column 34a is shown in FIG. 6B. The dynamic brewing chamber cleaner 31 includes slots 39a providing opposing sheets of water 38a for cleaning the brewing chamber, and ports 37 provide tangential flows 36 rotating the column 34a. The dynamic brewing chamber cleaner 31a is otherwise similar to the dynamic brewing chamber cleaner 31.

A cross-sectional view of a third dynamic brewing chamber cleaner 31b having internal propeller elements 43 is shown in FIG. 7. The water flow 42 through the internal propellor elements 43 causes the column 34a to spin, thus providing dynamic water dispersion into the brewing chamber 29. The third dynamic brewing chamber cleaner 31b is otherwise similar to the dynamic brewing chamber cleaner 31.

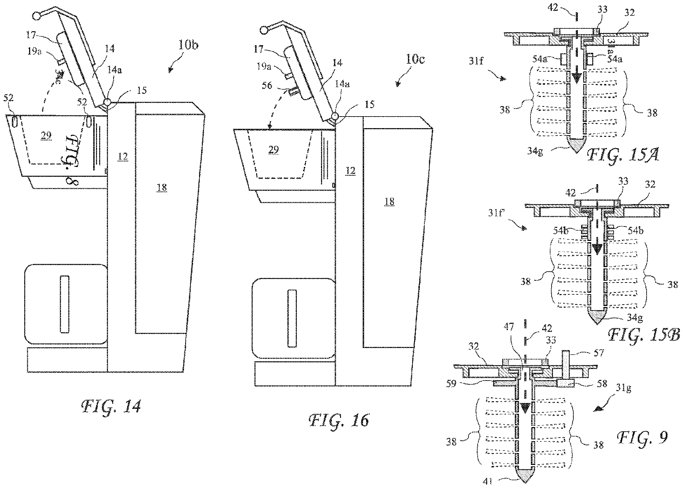

A cross-sectional view of a fourth dynamic brewing chamber cleaner 31c having tangentially directed sprays is shown in FIG. 8 and a cross-sectional view of the fourth dynamic brewing chamber cleaner 31c taken along line 9-9 of FIG. 8 is shown in FIG. 9. The ports 39b direct the flows 36 tangentially to rotate the column 34b which does not include the arms 35. The fourth dynamic brewing chamber cleaner 31c is otherwise similar to the dynamic brewing chamber cleaner 31.

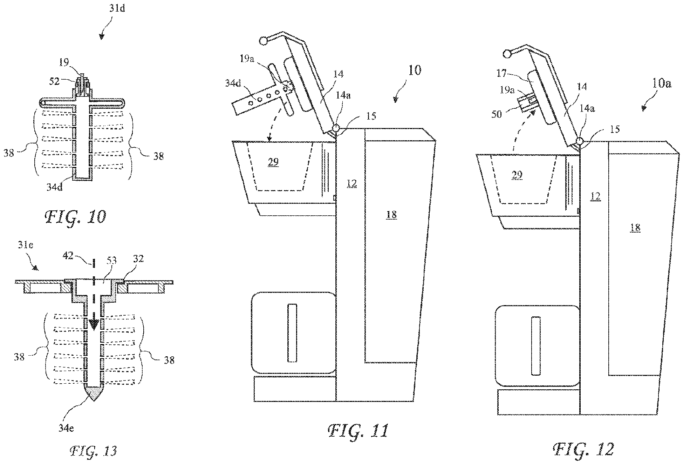

A fifth dynamic brewing chamber cleaner 31d attachable to the coffee maker nozzle 19a is shown in FIG. 10 and the coffee maker 10 with the dynamic brewing chamber cleaner 31e is shown attached to the nozzle 19a in FIG. 11. The brewing chamber cleaner 31d is similar to the dynamic brewing chamber cleaner 31, but includes a bearing or bushing 52 rotatably connecting the column 34d to the nozzle 19a. The fifth dynamic brewing chamber cleaner 31d is otherwise similar to the dynamic brewing chamber cleaner 31.

A coffee maker 10a including a rotating shaft 50 engaging a sixth dynamic brewing chamber cleaner 31e is shown in FIG. 12 and a cross-sectional view of the chamber cleaner 31e having a center column 34e rotated by the rotating shaft 50 is shown in FIG. 13. The rotating shaft 50 engages a socket 53 to rotate the column 34e. The sixth dynamic brewing chamber cleaner 31e is otherwise similar to the dynamic brewing chamber cleaner 31.

A coffee maker 10b including stator windings 52 creating a rotating stator field in a seventh dynamic chamber cleaner 31f is shown in FIG. 14 and a cross-sectional view of the dynamic brewing chamber cleaner 31f including dynamic water dispersion including magnets 54a rotated by the rotating stator field created by the coffee maker 10b is shown in FIG. 15A and a squirrel cage 54b rotated by the rotating stator field created by the coffee maker 10b is shown FIG. 15B. The seventh dynamic brewing chamber cleaner 31f is otherwise similar to the dynamic brewing chamber cleaner 31.

A coffee maker 10c including an offset rotating shaft 56 engaging an eighth dynamic brewing chamber cleaner 31g including dynamic water dispersion is shown in FIG. 16 and a cross-sectional view of the dynamic brewing chamber cleaner 31g having an offset shaft 57 engaging the offset shaft 56, and gears 58 and 59 rotating the center column is shown in FIG. 17. The offset shafts avoid the nozzle 19a and passage 47. The gears 58 and 59 maybe replaced by rollers, or by a belt and hubs. The eighth chamber cleaner 31g is otherwise similar to the dynamic brewing chamber cleaner 31.

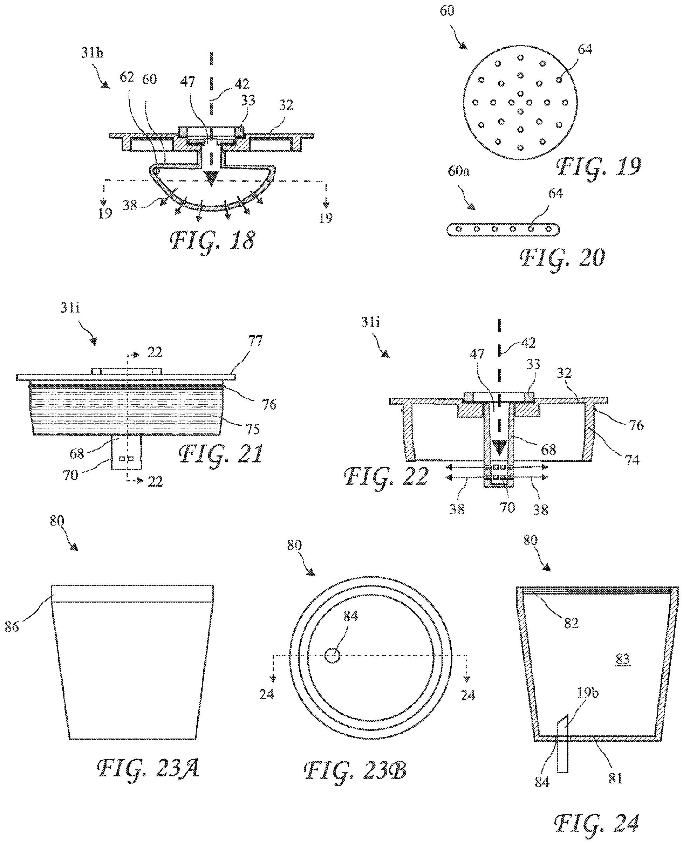

A cross-sectional view of a ninth dynamic brewing chamber cleaner 31h including a dome 60 for dispersing water is shown in FIG. 18 and a cross-sectional view of the dome 60 taken along line 19a-19a of FIG. 18 is shown in FIG. 19a. The dome 60 maybe rotated by offset tangential sprays from ports 62 similar to sprays 36 (see FIG. 5), or the dome 60 may be rotated by any of the means shown for brewing chamber cleaner 31a -31g. The dome 60 includes at least one dispersion port 64, and preferably a multiplicity of dispersion ports 64. The ninth chamber cleaner 31h is otherwise similar to the dynamic brewing chamber cleaner 31.

An alternative one dimensional dome 60a is shown in FIG. 20 having a single row of dispersion ports 64.

A side view of a fixed stationary chamber cleaner 31i is shown in FIG. 21 and cross-sectional view of the fixed stationary chamber cleaner 31i is shown in FIG. 22. The brewing chamber cleaner 31i includes a cylindrical extension 68 reaching down into the brewing chamber. The cylindrical extension 68 includes at least one set of orifices 70 opening into the brewing chamber to release sprays 38 of cleaning solution. The orifices 70 may be radially aimed to provide a horizontal spray, or aimed partially up, or be aimed partially down providing a conical spray, preferably not exceeding 45 degrees below the horizontal. The orifices 70 preferably have a cross-section between 0.5mm² and 12mm², and more preferably have a cross-section between 1.6mm2 and 10mm2, and most preferably have a cross-section of about 6mm², to balance sufficient flow and intensity of the spray 38. The orifices 70 may be a single set at the same depth, or two or more sets spaced apart vertically at different depths.

The brewing chamber cleaner 31i further includes a skirt 74 for guiding into the brewing chamber 29 (see FIG. 2). The skirt 74 may be tapered to simplify centering on the brewing chamber 29, and includes an annular ring 76 for retaining an extraction needle cleaner 80 (see FIGS. 23A, 23B, and 24), and may include annular scoring 75 providing an interference fit to the extraction needle cleaner 80. A rim 77 reaches radially past the skirt 74 to support the brewing chamber cleaner 31i above the brewing chamber 29.

A side view of the extraction needle cleaner 80 is shown in FIG. 23A, a top view of the extraction needle cleaner 80 is shown in FIG. 23B, and a cross-sectional view of the extraction needle cleaner 80, taken along line 24-24 of FIG. 23B, is shown in FIG. 24. The extraction needle cleaner 80 is preferably a frusto conical shaped cup deep enough to capture a portion of the extraction needle 19b in an interior 83, and more preferably fits in the envelope of single serving brewing material cartridges sold under the name K_CUP®. Such single serving brewing material cartridges are disclosed in US Patent No. 7,165,488, incorporated herein by reference.

The extraction needle cleaner 80 includes a top portion 86 configured to engage the skirt 74 of the brewing chamber cleaner 31i (see FIG. 21). The top portion 86 may include an annular recess 82 for positive engagement with the annular ring 76 of the lid 31i, and may have a surface selected to cooperate with the annular scoring 75 on the skirt 74 to retain the attachment of the extraction needle cleaner 80 to the brewing chamber cleaner 31i.

The extraction needle cleaner 80 may be a sturdy plastic cup including a pre-formed passage 84 aligned with the extraction needle 19b (see FIG. 2), and the base 81 of the extraction needle cleaner 80 may be a rubber for other flexible material to slide over the extraction needle 19b providing a seal. The extraction needle cleaner 80 may also be a thin plastic piece with no pre-formed passage 84, and the extraction needle 19b may pierce the plastic when the pre-formed passage 84 is inserted into the brewing chamber 19, for example, when the brewing chamber lid 14 is closed on the brewing chamber cleaner 31i with the brewing chamber 19 attached to the brewing chamber cleaner 31i.

When the coffee maker 10 is operated with cleaning liquid in the water tank 18 (see FIG. 2) and the brewing chamber cleaner 31i in the brewing chamber 19 without the extraction needle cleaner 80 attached, the cleaning liquid is sprayed out of the cylindrical extension 68 against the interior of the brewing chamber 19, thus cleaning the brewing chamber 29. When the coffee maker 10 is operated with cleaning liquid in the water tank 18 (see FIG. 2) and the brewing chamber cleaner 31i in the brewing chamber 29 with the extraction needle cleaner 80 attached, the cleaning liquid is sprayed out of the cylindrical extension 68 filling the extraction needle cleaner 80 and washing the extraction needle 19b. The cleaning may be done in either order, and may be three steps, the first and third without the extraction needle cleaner 80 attached, and the second with the extraction needle cleaner 80 attached. A final step is preferably performed using water only to rinse the brewing chamber 29 and extraction needle 19b.

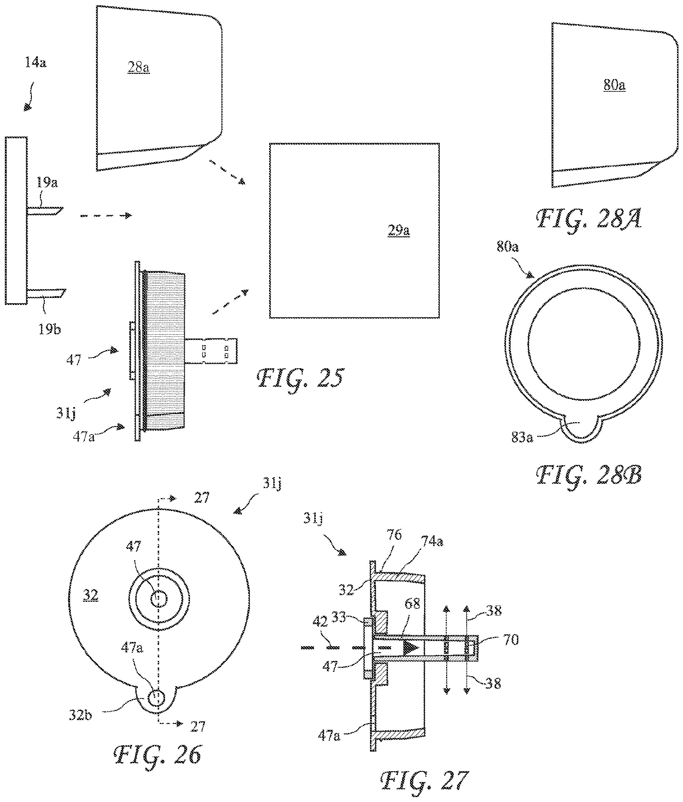

A second brewing chamber 29a, a brewing material cartridge 28a for the brewing chamber 29a, and a brewing chamber cleaner 31j for the second brewing chamber 29a, are shown in FIG. 25. The brewing material cartridge 28a resides on its side in the brewing chamber 29a and the injection needle 19a and extraction needle 29b are attached to a second brewing chamber lid 14a. The brewing chamber cleaner 31j includes the passage 47 for the injection needle 19a, and a second passage 47a for the extraction needle 19b.

An end view of the brewing chamber cleaner 31j is shown in FIG. 26 and a cross-sectional view of the brewing chamber cleaner 31j, taken along line 27-27 of FIG. 26, is shown in FIG. 27. A lid 32a of the brewing chamber cleaner 31j includes an extended portion 32b including the passage 47a for the extraction needle 19b, and a skirt 74a providing clearance for the extraction needle 19b. The brewing chamber cleaner 31j is otherwise similar to the brewing chamber cleaner 31i.

A side view of an extraction needle cleaner 80a for the second brewing chamber configuration is shown in FIG. 28A and a top view of the extraction needle cleaner 80a is shown in FIG. 28B. The interior of the extraction needle cleaner 80a includes an extraction needle clearance area 83a providing space for the extraction needle 19b. The extraction needle cleaner 80a is otherwise similar to the extraction needle cleaner 80.

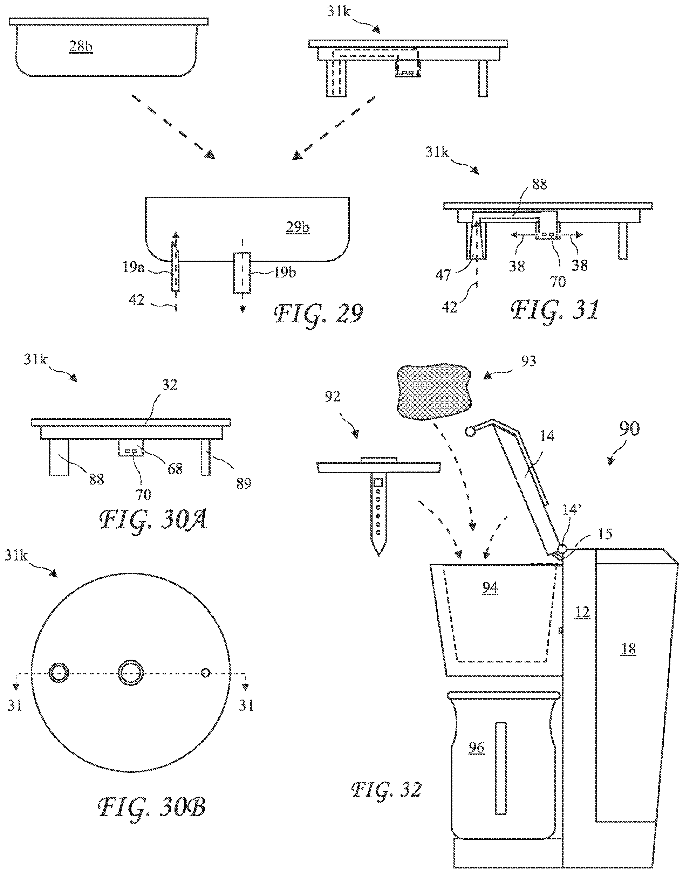

A third brewing chamber 29b configuration and a brewing chamber cleaner 31k for the third brewing chamber 29b are shown in FIG. 29. The brewing chamber 29b is configured to receive a brewing cartridge 28h, for example, of the type disclosed in US Patent No. 8,087,347. The '347 patent is incorporated herein by reference in its entirety.

A side view of the brewing chamber cleaner 31k is shown in FIG. 30A, a bottom view of the brewing chamber cleaner 31k is shown in FIG. 30B, and a cross-sectional view of the brewing chamber cleaner 31k taken alone line 31-31 of FIG. 30B is shown in FIG. 31. The brewing chamber cleaner 31k includes a lid portion 32, an inlet column 88, and a support member 89 to position the brewing chamber cleaner 31k in the brewing chamber 29b. A cylindrical extension 68 is generally centered in the brewing chamber 29b and includes orifices 70. The inlet column 88 includes a tapered inlet 47. The brewing chamber cleaner 31k is otherwise similar to the brewing chamber cleaner 31i

A multi-cup coffee maker 90, and brewing chamber cleaner 92 for use in the multi-cup coffee maker, are shown in FIG. 32. The multi-cup coffee maker 90 includes a brewing chamber 94 for receiving a portion of brewing material 93 to make a multi-cup serving of brewed beverage released into a carafe 96. The brewing chamber cleaner 92 preferably rests on a top edge of the brewing chamber 94, but may rest on features of the interior of the brewing chamber 94. Other than size, and positioning features, the brewing chamber cleaner 92 maybe similar to any of the brewing chamber cleaners 31-31i.

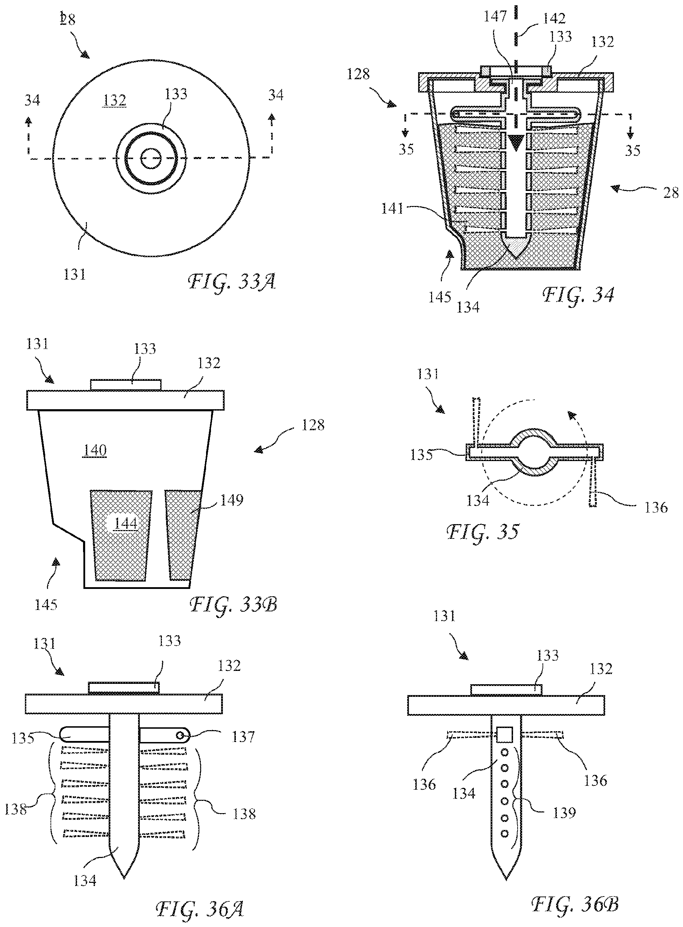

A top view of a brewing material holder 128 including a brewing chamber accessory comprising a dynamic water dispersion accessory 131 according to the present invention is shown in FIG. 33A, and a side view of the brewing material holder 128 comprising the dynamic water dispersion accessory 131 attached to a holder base 140 is shown in FIG. 33B. The dynamic water dispersion accessory 131 includes a lid 132 attachable to and removable from the base 140. A sealing portion 133 may extend up from the lid 132 to seal to the coffee maker 10 (see FIG. 2) to contain the flow of water 42 under pressure to the brewing material holder 128. The holder 128 may be configured to allow use in coffee makers sold under the trademark KEURIG which include a top puncture needle for injecting pressurized water into a brewing cartridge, and a bottom puncture needle for puncturing sealed brewing cartridges to extract brewed beverage. Such coffee makers are described in US Patent No. 5,325,765, incorporated herein by reference in its entirety.

The base 140 may further include a bottom recess 145 to avoid the bottom needle disclosed in the '765 patent. The recess 145 may be into the side of the holder, or into the bottom of the holder. In another embodiment, an injection needle or an extraction needle may penetrate the cartridge from a side versus the top or bottom. The base 140 further includes mesh 144 (or the like) covered window 149 to retain the brewing material in the brewing material holder 128 during brewing, and release brewed drink from the brewing material holder 128.

A cross-sectional view of the brewing material holder 128 including dynamic water dispersion according to the present invention, along line 34-34 of FIG. 33A, is shown in FIG. 34 and a cross-sectional view of the brewing material holder 128 taken along line 35-35 of FIG. 34 is shown in FIG 35. The pressurized flow of water 42 enters the brewing material holder 128 through a passage 147 in the lid 132. The passage 147 maybe configured to accept the top puncture needle of the '765 patent. A hollow, vertical, pointed column (or dispensing member) 134 is rotatable attached to the lid 132. The column 34 extends down into the base 140 and includes ports 139 (see FIG. 36B) releasing radial sprays of water 138 (see FIG. 36A) into the base 140 and into brewing material 141 in the base 140. The column 134 includes arms 135 extending radially and including ports 137 releasing tangential sprays of water 136. The tangential sprays of water 136 urge the column 134 to spin, thus providing dynamic water dispersion into the brewing material 141.

A side view of the lid assembly 131 the brewing material holder 128 is shown in FIG. 36A and a second side view of the lid assembly 131 rotated 90 degrees is shown in FIG. 36B.

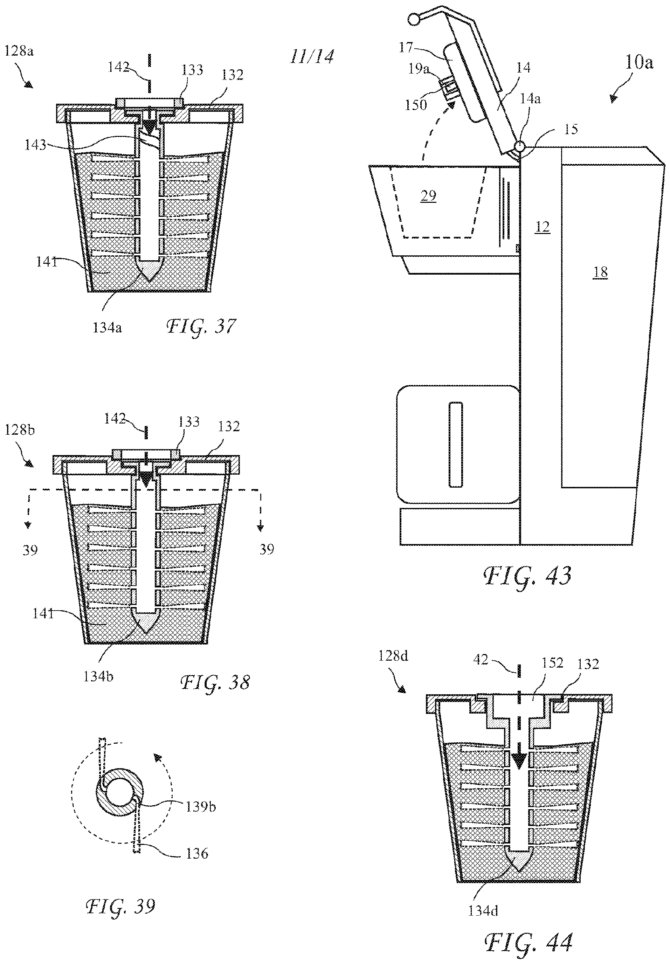

A cross-sectional view of a second brewing material holder 128a including dynamic water dispersion having internal propeller elements 143 is shown in FIG. 37. The water flow 42 through the internal propeller elements 143 causes the column 134a to spin, thus providing dynamic water dispersion into the brewing material 141. The second brewing material holder 128a is otherwise similar to the brewing material holder 128.

A cross-sectional view of a third brewing material holder 128b including dynamic water dispersion and having tangentially directed sprays is shown in FIG. 38 and a cross-sectional view of the third brewing material holder 128b taken along line 39-39 of FIG. 38 is shown in FIG. 39. The ports 139b direct the flows 136 tangentially to rotate a second hollow, vertical, rotating column 134b, which does not include the arms 135. The third brewing material holder 128b is otherwise similar to the brewing material holder 128.

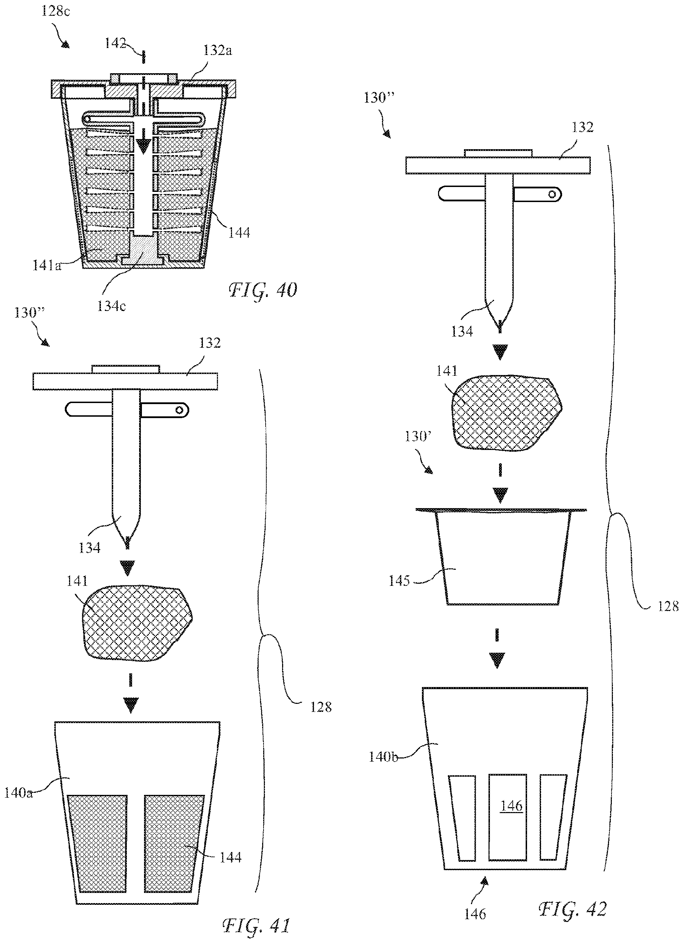

A cross-sectional view of a fourth brewing material holder 128c including dynamic water dispersion and having a third hollow, vertical, rotating column 134c rotatably carried by a holder base 141a is shown in FIG. 40. A lid 132a guides the water flow 42 into the center column 134c. Mesh material 144 in walls of the base 141a allows brewed drink to escape from the holder 128c. The fourth brewing material holder 128c is otherwise similar to the brewing material holder 128.

An exploded view of a holder 128 with mesh material 144 in walls of a base 40a to retain brewing material 141 is shown in FIG. 41. This embodiment may be used with the column 134 attached to the lid or to the base.

An exploded view of a holder 128 with a filter paper cup 145 inserted into the base 140b to retain brewing material 141. Windows 146 are provided in the walls and/or bottom of the base 140b to allow the brewed drink to escape, the windows 146 mayor may not include the mesh material 144. The column 134 is preferably attached to the lid 132 in this embodiment because a column attached to the base may interfere with the filter paper cup 145.

A coffee maker 10a including a rotating shaft 150 for engaging a fifth brewing material holder 128d is shown in FIG. 43 and a cross-sectional view of the holder 128d having a fourth hollow, vertical, rotating column 134d rotated by the rotating shaft 150 is shown in FIG. 14.

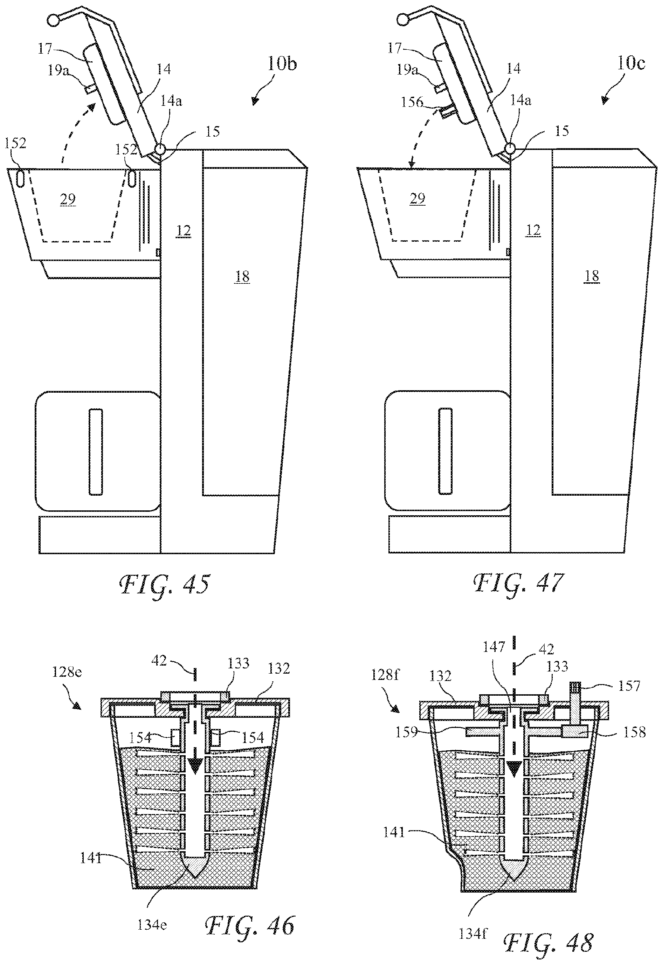

A coffee maker 10b including stator windings 152 creating a rotating stator magnetic field in a sixth brewing material holder 128e is shown in FIG. 45 and a cross-sectional view of the holder 128e including dynamic water dispersion includes magnets or squirrel cage elements 154 attached to a fifth hollow, vertical, rotating column 134e and rotated by the rotating stator field created by the coffee maker 10b is shown in FIG. 46.

A coffee maker 10c including an offset rotating shaft 156 for engaging a seventh brewing material holder 128f including dynamic water dispersion is shown in FIG. 47 and a cross-sectional view of the brewing material holder 128f having an offset shaft 157 engaging the offset shaft 156, and a drive member 158 and driven member 159 rotating a sixth hollow, vertical, rotating 134f, is shown in FIG. 48. The offset shafts avoid the nozzle 19 and passage 147. The driver member 158 and driven member 159 maybe gears, rollers, a belt and hubs, or the like.

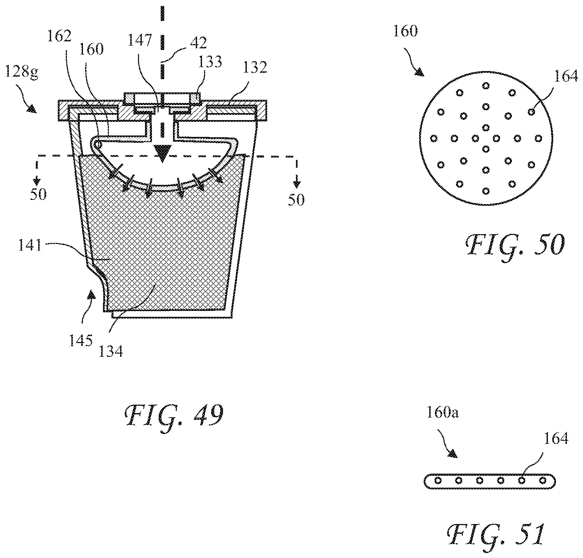

A cross-sectional view of an eighth brewing material holder 128g including dynamic water dispersion having a dome 160 for dispersing water is shown in FIG. 49 and a cross-sectional view of the dome 160 taken along line 20-20 of FIG. 19 is shown in FIG. 50. The dome 160 may be rotated by offset tangential sprays from ports 162 similar to sprays 136 (see FIG. 35), or the dome 160 may be rotated by any of the means shown for brewing material holders 128a-128f. The dome 160 includes at least one dispersion port 164, and preferably a multiplicity of dispersion ports 164.

An alternative one dimensional dome 160a is shown in FIG. 51 having a single row of dispersion ports 164. The one dimensional dome 160a may be rotated by any of the methods shown for brewing material holders 128a-128f to provide dynamic water dispersion into the brewing material.

A brewing material holder is thus described which includes a holder base having an interior configured to hold brewing material, a removable holder lid attachable to the holder base, a water inlet in the holder lid alignable with a brewer nozzle extending down from a brewing chamber lid to receive a water flow from a brewer, a spinning dispersing member inside the brewing material holder, and passages through the rotating dispersing member in fluid communication with the water inlet and ending in ports directing sprays of water into the brewing material. The rotating dispersing member may be a hollow, vertical, rotating column may include a plurality of vertically spaced apart ports in fluid communication with the water flow and producing radial sprays, the column may include at least two opposing arms extending radially from the column proximal to the holder lid, each arm may include a tangential port in fluid communication with the water flow and producing tangentially sprays to rotate the column. The plurality of vertically spaced apart ports comprise opposing pairs of ports producing opposing radial sprays. The hollow, vertical, rotating column may be rotatably attached to the holder lid and include a pointed end opposite to the holder lid to facilitate pressing into brewing material in the holder base, or the hollow, vertical, rotating column may be rotatably attached to the holder base and engages the holder lid to receive the water flow. The rotating dispersing member may be a hollow, vertical, rotating column may include a plurality of vertically spaced apart ports in fluid communication with the water flow and producing tangential sprays to rotate the column, and may be rotatably attached to the holder lid and includes a pointed end opposite to the holder lid to facilitate pressing into brewing material in the holder base or may be rotatably attached to the holder base and engages the holder lid to receive the water flow. The rotating dispersing member may further be a hollow, vertical, rotating column may include a plurality of vertically spaced apart ports in fluid communication with the water flow and producing sprays into the brewing material, the column may include internal propellor elements to rotate the column when the water flow flows past the internal propellor elements. The rotating dispersing member may further be a hollow, vertical, rotating column may include a plurality of vertically spaced apart ports in fluid communication with the water flow and producing sprays into the brewing material, a brewing chamber lid may include a rotating member co-axial with the brewer nozzle and facing into the holder, and the column may engage the rotating member to rotate the column. The rotating dispersing member may be a hollow, vertical, rotating column may include a plurality of vertically spaced apart ports in fluid communication with the water flow and producing sprays into the brewing material, the brewing chamber lid includes an offset rotating member offset from the brewer nozzle and facing into the holder, the holder lid may include an offset driver member engageable with the offset rotating member and the column may include a driven member cooperating with the driver member to rotate the shaft. The rotating dispersing member may include a plurality of vertically spaced apart ports in fluid communication with the water flow and producing sprays into the brewing material, the holder may reside in a brewing chamber, the stator windings may surround the brewing chamber, and magnets or a squirrel cage may attached to the column, the magnets or squirrel cage may cooperate with a rotating stator magnetic field to rotate the column.

### Industrial Applicability

The present invention finds industrial applicability in the field of brewed beverage.

### Scope of the Invention

While the invention herein disclosed has been described by means of specific embodiments and applications thereof, numerous modifications and variations could be made thereto by those skilled in the art without departing from the scope of the invention set forth in the claims.

## Claims

1. A brewing chamber cleaner comprising:
a lid (32) configured to be retained in a beverage brewer proximal to a brewing chamber water supply (42) and to rest above a brewing chamber;
a passage (47) of the lid;
a cylindrical extension (68) attached to the lid;
an interior of the cylindrical extension configured to be in fluid communication with the brewing chamber water supply through the passage; and
orifices (70) in the cylindrical extension providing fluid communication between the interior of the cylindrical extension and the brewing chamber, the orifices positioned and sized to spray the liquid flow through the orifices into the brewing chamber,
a skirt (74) reaching downward from the lid;
a ring (76) extending radially from the lid, at the exterior of the skirt, for supporting the brewing chamber cleaner in the brewing chamber;
wherein the orifices (7) open into the brewing chamber to release sprays (38) of cleaning solution,
wherein the cylindrical extension reaches down into the brewing chamber, such that the passage provides fluid communication (42) from the top of the lid to the at least one set of orifices through the passage of the cylindrical extension.

2. The brewing chamber cleaner of claim 1, wherein the skirt includes a lower inwardly tapered portion for centering the brewing chamber cleaner in the brewing chamber.

3. The brewing chamber cleaner of claim 2, further including:
an extraction needle cleaner (80) comprising a cup attachable to the lid; and
the cup being sufficiently deep to capture a portion of an extraction needle (19b) in an interior of the extraction needle cleaner.

4. The brewing chamber cleaner of claim 3, wherein: a top portion of the extraction needle cleaner includes an interior annular ring configured to engage the exterior annular ring (76) to retain the extraction needle cleaner on the skirt.

5. The brewing chamber cleaner of claim 4, wherein:
the skirt includes an annular scoring (75); and
a top portion of the extraction needle cleaner includes an interior surface configured to provide an interference fit to the annular scoring to retain the extraction needle cleaner on the skirt.

6. The brewing chamber cleaning according to any one of the claims 1 to 5, wherein the extraction needle cleaner is a sturdy plastic cup including a pre-formed passage 84 aligned with the extraction needle 19b.

7. The brewing chamber cleaner according to claim 6, wherein the base 81 of the extraction needle cleaner is a flexible material to allow sliding over the extraction needle 19b, thereby providing a seal.

8. The brewing chamber cleaner according to claim 7, wherein the flexible material is rubber.

9. The brewing chamber cleaner of claim 1, wherein the cylindrical extension is fixedly attached to the lid.

10. The brewing chamber cleaner of claim 1, wherein the dispensing member is rotatably attached to the lid to provide a rotating spray.

11. The brewing chamber cleaner of claim 10, wherein at least one spray from the dispensing member is at least partially tangential to rotate the dispensing member.

12. The brewing chamber cleaner of claim 11, wherein the dispensing member includes internal propeller elements to rotate the dispensing member.

13. The brewing chamber cleaner of claim 10, wherein the coffee maker includes a rotating shaft to rotate the dispensing member.

14. The brewing chamber cleaner of claim 10, wherein the coffee maker includes an electrical coil around the brewing chamber and the dispensing member includes magnets (54a) to rotate the dispensing member.

15. The brewing chamber cleaner of claim 10, wherein the coffee maker includes an electrical coil around the brewing chamber and the dispensing member includes an electrically conducting squirrel cage rotor (54b) to rotate the dispensing member.

16. The brewing chamber cleaner of claim 1, wherein the dispensing member includes radially aimed orifices providing a horizontal spray into the brewing chamber.

17. The brewing chamber cleaner of claim 1, wherein the dispensing member includes downward aimed orifices providing a conical spray into the brewing chamber.

18. The brewing chamber cleaner of claim 1, wherein the orifices have a total cross-sectional area between 0.5mm² and 12mm².

19. The brewing chamber cleaner of claim 1, wherein the orifices have a total cross-sectional area between 1.6mm² and 10mm².

20. The brewing chamber cleaner of claim 1, wherein the orifices have a total cross-sectional area of about 6mm².

## Patentansprüche

1. Brühkammer-Zubehörteil, das Folgendes umfasst:
einen Deckel (32), der dafür konfiguriert ist, in einer Getränkebrühvorrichtung proximal zu einer Brühkammer-Wasserzufuhr (42) festgehalten zu werden und oberhalb einer Brühkammer aufzuliegen,
einen Durchgang (47) des Deckels,
eine zylindrische Verlängerung (68), die an dem Deckel befestigt ist,
ein Inneres der zylindrischen Verlängerung in Fluidverbindung mit der Brühkammer-Wasserzufuhr durch den Durchgang und Öffnungen (70) in der zylindrischen Verlängerung, die eine Fluidverbindung zwischen dem Inneren der zylindrischen Verlängerung und der Brühkammer bereitstellen, wobei die Öffnungen dafür angeordnet und bemessen sind, den Flüssigkeitsstrom durch die Öffnungen in die Brühkammer zu sprühen,
eine Schürze (74), die von dem Deckel aus nach unten reicht,
einen Ring (76), der sich von dem Deckel aus in Radialrichtung, über die Schürze hinaus, erstreckt, zum Stützen des Brühkammer-Zubehörteils in der Brühkammer,
wobei die zylindrische Verlängerung wenigstens einen Satz von Öffnungen einschließt, die sich in die Brühkammer öffnen, um Sprühnebel (38) einer Reinigungslösung freizusetzen,
wobei die zylindrische Verlängerung derart nach unten in die Brühkammer reicht, dass der Durchgang eine Fluidverbindung (42) von dem Oberteil des Deckels bis zu dem wenigstens einen Satz von Öffnungen durch den Durchgang der zylindrischen Verlängerung bereitstellt.

2. Brühkammerreiniger nach Anspruch 1, wobei die Schürze einen unteren nach innen verjüngten Abschnitt zum Zentrieren des Brühkammerreinigers in der Brühkammer einschließt.

3. Brühkammerreiniger nach Anspruch 2, der ferner Folgendes einschließt:
einen Extraktionsnadelreiniger (80), der einen Becher umfasst, der an dem Deckel befestigt werden kann, und
wobei der Becher ausreichend tief ist, um einen Abschnitt einer Extraktionsnadel (19b) in einem Inneren des Extraktionsnadelreinigers aufzunehmen.

4. Brühkammerreiniger nach Anspruch 3, wobei: die Schürze einen äußeren ringförmigen Ring einschließt und
ein oberer Abschnitt des Extraktionsnadelreinigers einen inneren ringförmigen Ring einschließt, der dafür konfiguriert ist, den äußeren ringförmigen Ring in Eingriff zu nehmen, um den Extraktionsnadelreiniger an der Schürze festzuhalten.

5. Brühkammerreiniger nach Anspruch 4, wobei:
die Schürze eine ringförmige Einkerbung (75) einschließt und
ein oberer Abschnitt des Extraktionsnadelreinigers eine Innenfläche einschließt, die dafür konfiguriert ist, eine Presspassung mit der ringförmigen Einkerbung bereitzustellen, um den Extraktionsnadelreiniger an der Schürze festzuhalten.

6. Brühkammerreiniger nach einem der Ansprüche 1 bis 5, wobei der Extraktionsnadelreiniger ein robuster Kunststoffbecher ist, der einen vorgeformten Durchgang 84 einschließt, der mit der Extraktionsnadel 19b ausgerichtet ist.

7. Brühkammerreiniger nach Anspruch 6, wobei die Basis 81 des Extraktionsnadelreinigers aus einem flexiblen Material besteht, um ein Gleiten über die Extraktionsnadel 19b zu ermöglichen, wodurch eine Dichtung bereitgestellt wird.

8. Brühkammerreiniger nach Anspruch 7, wobei das flexible Material Gummi ist.

9. Brühkammerreiniger nach Anspruch 1, wobei die zylindrische Verlängerung fest an dem Deckel befestigt ist.

10. Brühkammerreiniger nach Anspruch 1, wobei das Abgabeelement drehbar an dem Deckel befestigt ist, um einen sich drehenden Sprühnebel bereitzustellen.

11. Brühkammerreiniger nach Anspruch 10, wobei wenigstens ein Sprühnebel von dem Abgabeelement wenigstens teilweise tangential ist, um das Abgabeelement zu drehen.

12. Brühkammerreiniger nach Anspruch 11, wobei das Abgabeelement innere Propellerelemente einschließt, um das Abgabeelement zu drehen.

13. Brühkammerreiniger nach Anspruch 10, wobei die Kaffeemaschine eine sich drehende Welle einschließt, um das Abgabeelement zu drehen.

14. Brühkammerreiniger nach Anspruch 10, wobei die Kaffeemaschine eine elektrische Spule um die Brühkammer einschließt und das Abgabeelement Magnete (54a) einschließt, um das Abgabeelement zu drehen.

15. Brühkammerreiniger nach Anspruch 10, wobei die Kaffeemaschine eine elektrische Spule um die Brühkammer einschließt und das Abgabeelement einen elektrisch leitenden Käfigläufer (54b) einschließt, um das Abgabeelement zu drehen.

16. Brühkammerreiniger nach Anspruch 1, wobei das Abgabeelement radial gerichtete Öffnungen schließt, die einen horizontalen Sprühnebel in die Brühkammer bereitstellen.

17. Brühkammerreiniger nach Anspruch 1, wobei das Abgabeelement nach unten gerichtete Öffnungen schließt, die einen kegelförmigen Sprühnebel in die Brühkammer bereitstellen.

18. Brühkammerreiniger nach Anspruch 1, wobei die Öffnungen eine Gesamtquerschnittsfläche zwischen 0,5 mm² und 12 mm² aufweisen.

19. Brühkammerreiniger nach Anspruch 1, wobei die Öffnungen eine Gesamtquerschnittsfläche zwischen 1,6 mm² und 10 mm² aufweisen.

20. Brühkammerreiniger nach Anspruch 1, wobei die Öffnungen eine Gesamtquerschnittsfläche von etwa 6 mm² aufweisen.

## Revendications

1. Accessoire de chambre de brassage comprenant :
un couvercle (32) conçu pour être retenu dans un brasseur de boissons proximal à une alimentation en eau de chambre de brassage (42) et pour reposer au-dessus d'une chambre de brassage ;
un passage (47) du couvercle ;
une extension cylindrique (68) fixée au couvercle ;
un intérieur de l'extension cylindrique en communication fluidique avec l'alimentation en eau de chambre de brassage par l'intermédiaire du passage ; et
des orifices (70) pratiqués dans l'extension cylindrique et
permettant une communication fluidique entre l'intérieur de l'extension cylindrique et la chambre de brassage, les orifices étant positionnés et dimensionnés pour pulvériser le flux de liquide à travers les orifices dans la chambre de brassage,
une jupe (74) allant vers le bas en partant du couvercle ;
une bague (76) s'étendant radialement depuis le couvercle au-delà de la jupe pour supporter l'accessoire de chambre de brassage dans la chambre de brassage ;
l'extension cylindrique incluant au moins un ensemble d'orifices
ouvrant dans la chambre de brassage pour délivrer des pulvérisations (38) de solution nettoyante,
l'extension cylindrique allant vers le bas dans la chambre de brassage, de sorte que le passage permet une communication fluidique (42) depuis le haut du couvercle jusqu'à l'au moins un ensemble d'orifices à travers le passage de l'extension cylindrique.

2. Nettoyeur de chambre de brassage selon la revendication 1, dans lequel la jupe inclut une section basse effilée vers l'intérieur pour centrer le nettoyeur de chambre de brassage dans la chambre de brassage.

3. Nettoyeur de chambre de brassage selon la revendication 2, incluant en outre :
un nettoyeur d'aiguille d'extraction (80) comprenant une coupelle pouvant être fixée au couvercle ; et
la coupelle étant suffisamment profonde pour capturer une section d'une aiguille d'extraction (19b) dans un intérieur du nettoyeur d'aiguille d'extraction.

4. Nettoyeur de chambre de brassage selon la revendication 3, dans lequel : la jupe inclut une bague annulaire extérieure ; et
une section supérieure du nettoyeur d'aiguille d'extraction inclut une bague annulaire intérieure conçue pour s'engager dans la bague annulaire extérieure pour retenir le nettoyeur d'aiguille d'extraction sur la jupe.

5. Nettoyeur de chambre de brassage selon la revendication 4, dans lequel :
la jupe comporte une entaille annulaire (75); et
une section supérieure du nettoyeur d'aiguille d'extraction inclut une surface intérieure conçue pour permettre un ajustage à interférence avec l'entaille annulaire pour retenir le nettoyeur d'aiguille d'extraction sur la jupe.

6. Nettoyeur de chambre de brassage selon l'une quelconque des revendications 1 à 5 dans lequel le nettoyeur d'aiguille d'extraction est une coupelle en plastique robuste incluant un passage préformé 84 aligné avec l'aiguille d'extraction 19b.

7. Nettoyeur de chambre de brassage selon la revendication 6, dans lequel la base 81 du nettoyeur d'aiguille d'extraction est un matériau souple pour permettre un glissement sur l'aiguille d'extraction 19b, en créant ainsi un joint.

8. Nettoyeur de chambre de brassage selon la revendication 7, dans lequel le matériau souple est du caoutchouc.

9. Accessoire de chambre de brassage selon la revendication 1, dans lequel l'extension cylindrique est rattachée fixement au couvercle.

10. Nettoyeur de chambre de brassage selon la revendication 1, dans lequel l'élément de distribution est fixé de manière à pouvoir tourner au couvercle pour permettre une pulvérisation rotative.

11. Nettoyeur de chambre de brassage selon la revendication 10, dans lequel au moins une pulvérisation par l'élément de distribution est au moins partiellement tangentielle afin de faire tourner l'élément de distribution.

12. Nettoyeur de chambre de brassage selon la revendication 11, dans lequel l'élément de distribution inclut des éléments propulseurs internes pour faire tourner l'élément de distribution.

13. Nettoyeur de chambre de brassage selon la revendication 10, dans lequel la cafetière inclut un arbre rotatif pour faire tourner l'élément de distribution.

14. Nettoyeur de chambre de brassage selon la revendication 10, dans lequel la cafetière inclut une boucle électrique autour de la chambre de brassage et l'élément de distribution inclut des aimants (54a) pour faire tourner l'élément de distribution.

15. Nettoyeur de chambre de brassage selon la revendication 10, dans lequel la cafetière inclut une boucle électrique autour de la chambre de brassage et l'élément de distribution inclut un rotor en cage d'écureuil conducteur électrique (54b) pour faire tourner l'élément de distribution.

16. Nettoyeur de chambre de brassage selon la revendication 1, dans lequel l'élément de distribution inclut des orifices dirigés radialement permettant une pulvérisation horizontale dans la chambre de brassage.

17. Nettoyeur de chambre de brassage selon la revendication 1, dans lequel l'élément de distribution inclut des orifices dirigés vers le bas permettant une pulvérisation conique dans la chambre de brassage.

18. Nettoyeur de chambre de brassage selon la revendication 1, dans lequel les orifices ont une superficie de section transversale totale de 0,5 mm² à 12 mm².

19. Nettoyeur de chambre de brassage selon la revendication 1, dans lequel les orifices ont une superficie de section transversale totale de 1,6 mm² à 10 mm².

20. Nettoyeur de chambre de brassage selon la revendication 1, dans lequel les orifices ont une superficie de section transversale totale d'environ 6 mm².
